# EUROPEAN PATENT SPECIFICATION

(11) **EP 0 418 567 B1**
(45) Date of publication and mention of the grant of the patent: **13.04.1994**
(21) Application number: 90115914.5
(22) Date of filing: 20.08.1990
(51) Int. Cl.: G01G 3/142, G01G 23/00

(54) **Device for measuring a force, particularly a weight**
Einrichtung zum Messen einer Kraft insbesondere eines Gewichtes
Dispositif pour mesurer une force, en particulier une charge

(30) Priority: 25.08.1989 JP 219336/89
(43) Date of publication of application: 27.03.1991
(73) Proprietor: TOKYO ELECTRIC CO., LTD., Meguro-ku Tokyo (JP)
(72) Inventor: Nishiyama, Yoshihisa, Sunto-gun, Shizuoka-ken (JP)
(74) Representative: Weber, Joachim, Dr.

(56) References cited:
- EP-A- 0 216 638
- DE-A- 2 718 543
- GB-A- 1 460 587
- GB-A- 2 191 004
- US-A- 4 624 331
- US-A- 4 660 160

## Description

The present invention relates to a device for measuring a physical force, and more particularly, to a digital load cell weight using a plurality of load cells for measuring weight.

According to a conventional digital load cell weight, the weight values detected by load cells are respectively amplified, and converted into digital data, via analog-to-digital converters. The digitized detected weight values are then stored in memories. The values stored in the memories are summed to calculate total weight data, and the total weight data is sent to a total memory.

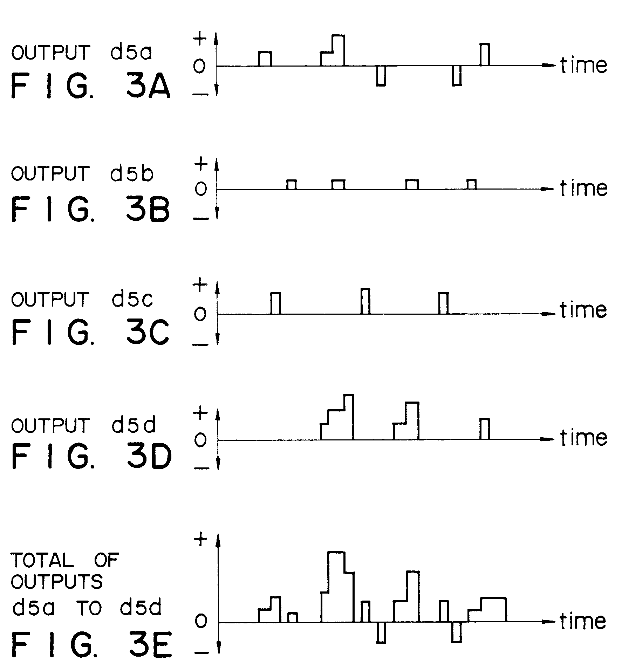

According to the above conventional configuration, however, when the digitized detected values involve low frequency noises, problems occur. More specifically, even if no load is applied to the load cell weight, when each detected value of the load cells involves low frequency noises, noise-affected waveforms as shown in Figs. 3A to 3D are input to the memories. If the values read from these memories are summed, a waveform of data stored in the total memory, which has to be normally zero level for zero weight, becomes one as is shown in Fig. 3E. Such a waveform will degrade the accuracy of weight measuring.

It is accordingly an object of the present invention to provide a physical force measuring device, typically a load cell weight, which can avoid degradation in the measuring accuracy due to low frequency noises.

To achieve the above object, a measuring device of the invention includes a plurality of load cells; analog-to-digital converting means for converting detection values, output from the load cells, into digital detection values; digital filters for respectively suppressing low frequency noise components in the digital detection values; and arithmetic operation means for summing outputs of the digital filters to provide weight data.

This invention can be more fully understood from the following detailed description when taken in conjunction with the accompanying drawings, in which:
Fig. 1 is a block diagram showing a load cell weight according to an embodiment of the present invention;
Fig. 2 is a perspective view of the load cell weight;
Figs. 3A to 3E illustrate waveforms of low frequency noises which vary with time;
Fig. 4 is a block diagram showing a load cell weight according to another embodiment of the present invention; and
Fig. 5 is a block diagram showing a load cell weight according to still another embodiment of the present invention.

Preferred embodiments of this invention will be described with reference to the accompanying drawings. In the description the same or functionally equivalent elements are denoted by the same or similar reference numerals, to thereby simplify the description.

In the following, a load cell weight according to an embodiment of the present invention will be described with reference to the accompanying drawings. Here, the load cell weight represents a device for measuring a physical "weight."

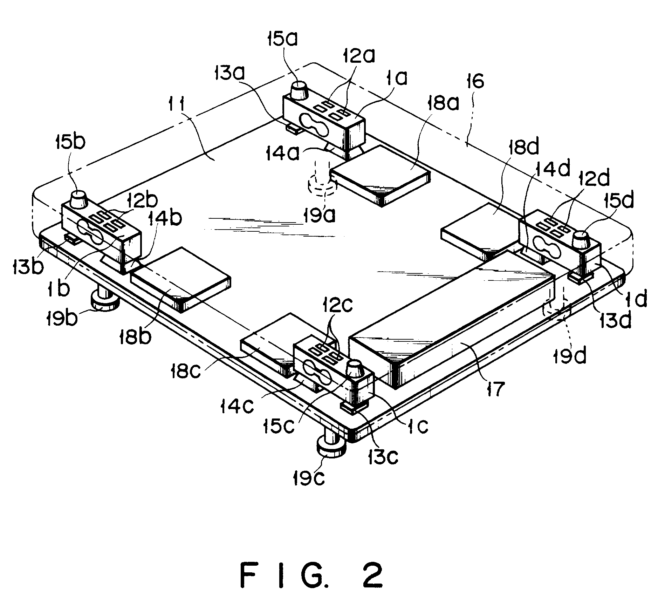

Fig. 2 shows a configuration wherein four load cells are employed. In the figure, the reference numeral 11 denotes a rectangular base body made of an aluminum or the like. Load cells 1a, 1b, 1c, and 1d are respectively located at the four corners of base body 11. Load cells 1a, 1b, 1c, and 1d are set at distortion generating bodies (Roberval mechanism) each having a nearly rectangular figure. The distortion generating body is provided with an 8-figure like through hole at the side thereof. On the thin top-plate over the through hole of each of load cells 1a, 1b, 1c, and 1d, two pairs of strain gauges 12a, 12b, 12c, and 12d are mounted.

Lower ends of load cells 1a, 1b, 1c, and 1d are mounted at mounting portions 14a, 14b, 14c, and 14d, respectively, which are fixed at base body 11. Other lower ends of load cells 1a, 1b, 1c, and 1d face overweight stoppers 13a, 13b, 13c, and 13d, respectively. Other upper ends of load cells 1a, 1b, 1c, and 1d are provided with projections 15a, 15b, 15c, and 15d, respectively. The top end of each of projections 15a, 15b, 15c, and 15d abuts on the inner plane of load plate 16 which has an open-box figure and whose size is slightly larger than the size of base body 11. Thus, load plate 16 can freely move along the vertical direction.

Base body 11 is further provided with enclosure cases 17, 18a, 18b, 18c, and 18d.

In addition, the rear sides of mounting portions 14a, 14b, 14c, and 14d, fixed at base body 11, are provided with variable-height legs 19a, 19b, 19c, and 19d, by which base body 11 can be kept horizontal.

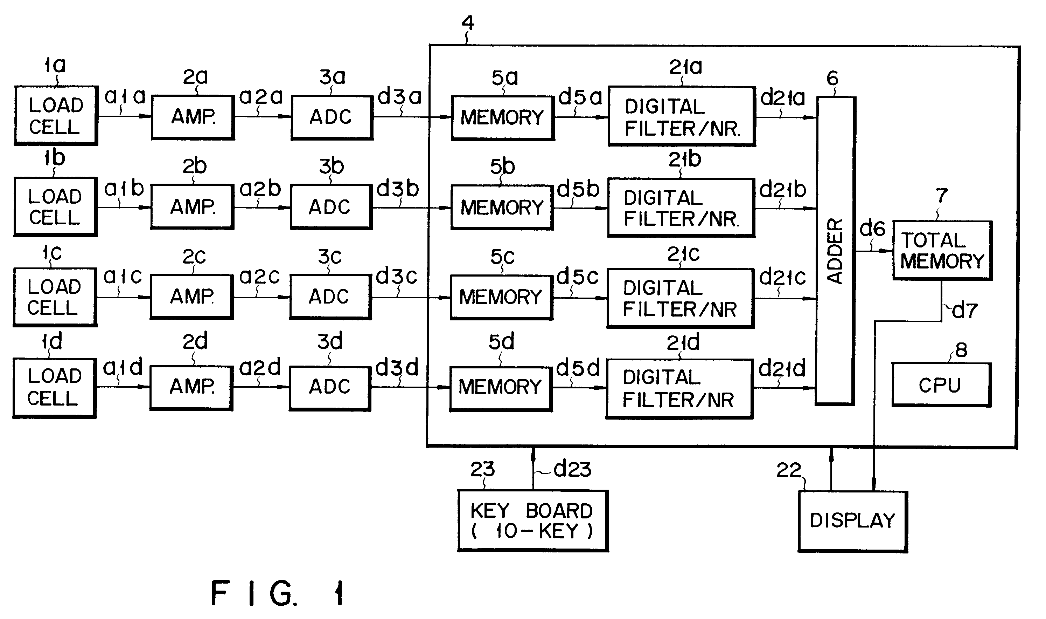

The above load cells 1a, 1b, 1c, and 1d are respectively connected to electronic circuits shown in Fig. 1.

Detection values a1a, a1b, a1c, and a1d from load cells 1a, 1b, 1c, and 1d are respectively amplified through amplifiers 2a, 2b, 2c, and 2d. Amplified analog values a2a, a2b, a2c, and a2d are respectively converted into digital values d3a, d3b, d3c, and d3d, via analog-to-digital converters (ADCs) 3a, 3b, 3c, and 3d.

Analog-to-digital converters 3a, 3b, 3c, and 3d are coupled to microcomputer system 4. Microcomputer system 4 includes memories (such as RAMs) 5a, 5b, 5d, and 5d which are respectively connected to analog-to-digital converters 3a, 3b, 3c, and 3d, and store digital values d3a, d3b, d3c, and d3d. Low frequency noise components involved in digital values d5a, d5b, d5c, and d5d, respectively read from memories 5a, 5b, 5d, and 5d, are reduced by digital filters (or digital noise reduction circuits) 21a, 21b, 21c, and 21d, individually.

Filtered outputs d21a, d21b, d21c, and d21d from digital filters 21a, 21b, 21c, and 21d are summed at adder 6, so that the total weight value is calculated. Total output d6 from adder 6 is sent to total memory 7.

Incidentally, microcomputer system 4 is connected with display 22 for displaying weight values, etc. and key board (10-key) 23 for inputting data.

The embodiment of Fig. 1 will operate as follows.

An object body (not shown) is placed on load plate 16 when weight measurement is performed. The strains caused at respective load cells 1a, 1b, 1c, and 1d are detected as analog signals a1a, a1b, a1c, and a1d. The detected values are respectively amplified via amplifiers 2a, 2b, 2c, and 2d, and then are converted into digital signals d3a, d3b, d3c, and d3d via analog-to-digital converter 3a, 3b, 3c, and 3d. Digital signals d3a, d3b, d3c, and d3d thus converted are stored in memories 5a, 5b, 5c, and 5d. Low frequency noise components involved in the digital signals read from memories 5a, 5b, 5c, and 5d are respectively and independently reduced by digital filters 21a, 21b, 21c, and 21d. Substantially noise-free digital values d21a, d21b, d21c, and d21d are summed at adder 6, and summed value d6 is stored in total memory 7. Value d7 (weight data) stored in memory 7 is displayed at display 22 in terms of "weight."

When a price corresponding to the measured weight is to be displayed, a price for a unit weight is input from 10-key 23. In response to data of the 10-key input and calculated weight data, CPU 8 calculates the product (d7 × d23) of the 10-key input with the measured weight, and the calculated product as well as the measured weight are indicated at display 22.

According to the embodiment as mentioned above, various low frequency noises as shown in Figs. 3A to 3D, which are different for respective load cells, are independently reduced by digital filters 21a, 21b, 21c, and 21d. Consequently, the noise reduction effect of the embodiment is superior to a case wherein only one filter is used for data in the total value as is shown in Fig. 3E.

According to the present invention, low frequency noise components, involved in detected values which are digitized through analog-to-digital converting means from the outputs of respective load cells, can be independently reduced by digital filters. Thus, the high performance noise reduction ensures a stable and accurate weight measuring.

In the embodiment of Fig. 1, four load cells are used. However, the number of the load cells may be three, or more than four.

Each characteristic of respective digital filters can be determined as follows: First, in the actual device according to an embodiment of the invention, the pattern of noise components as shown in Figs. 3A to 3D is obtained by experience. Second, the tendency of the actual noise pattern for each load cell is detected from the result of the experience, so that the filtering parameters of each digital filter is determined. Then, a combination of respective digital filters provides a high performance noise reduction which is superior to the performance of only one digital filter.

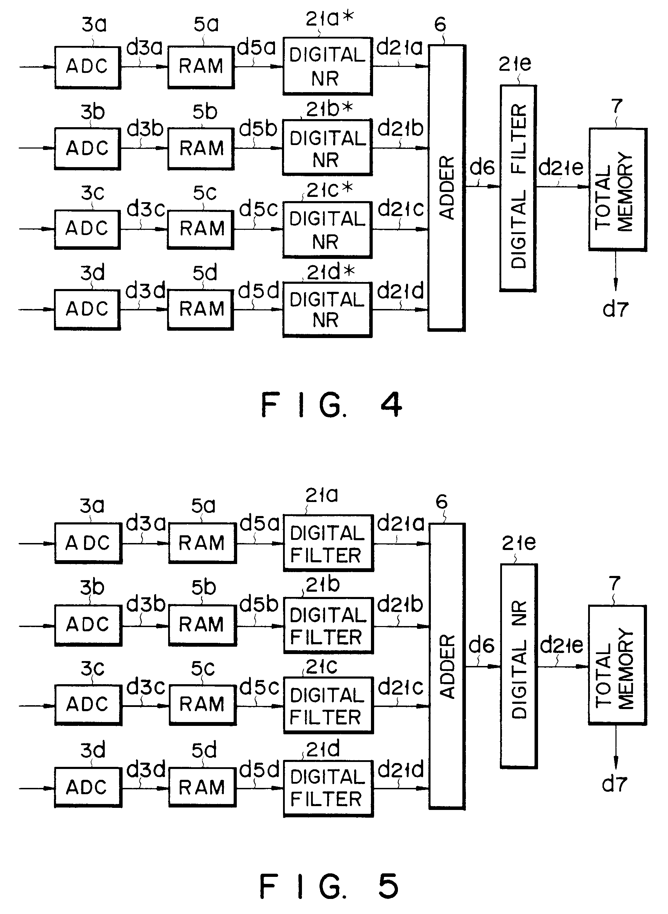

The above-mentioned digital filters can be replaced with digital noise reduction circuits 21a*-21d* shown in Fig. 4.

Digital noise reduction circuit 21a* performs the following operation, when the noise as is shown in Fig. 3A should be reduced.

More specifically, output d3a(t1) of ADC 3a obtained during a certain period (t1) is stored in memory (RAM) 5a and digital noise reduction circuit 21a*. During next period (t2), output d3a(t2) of ADC 3a is stored in memory 5a and is sent to circuit 21a* in which average d3a(t12) of preceding output d3a(t1) and new output d3a(t2) is calculated. Further, during subsequent period (t3), output d3a(t3) of ADC 3a is stored in memory 5a and is sent to circuit 21a* in which average d3a(t123) of preceding average d3a(t12) and new output d3a(t3) is calculated.

The above average calculations are repeated (i.e., output d3a is integrated with time). Then, random noise components of all periods are reduced with a rate of N (N is the number of the average calculations), while actual weight data, which is not a random variable, is not reduced with the above average calculations.

Each of remaining outputs d3b, d3c, and d3d is subjected to the above average calculations.

Sum d6 of the above averaged outputs is naturally low noise. However, if the noise has to be further reduced, another digital filter 21e may be additionally used for sum d6. Or, as shown in Fig. 5, one digital noise reduction circuit 21e* may be additionally used for sum d6 of outputs d21a-d21d from the digital filters.

The configuration of a load cell weight should not be limited to that shown in Fig. 2.

The following U.S. Patent discloses a relevant art with respect to digital processing of the present invention:
U.S. Patent No. 4,660,160 issued on April. 21, 1987 (Tajima et al.), "ELECTRONIC WEIGHING DEVICE HAVING LABEL PRINTER WITH DATA STABILITY CHECK".

## Claims

1. A physical force measuring device characterized by comprising:
means (1a-1d; 2a-2d; 3a-3d) for converting force into a plurality of digital signals (a3a-a3d);
noise reduction means (5a-5d; 21a-21d; 21a*-21d*) for independently reducing respective noise components of said digital signals (a3a-a3d) to provide a plurality of low noise digital signals (a21a-a21d); and
means (6, 7) for combining said low noise digital signals (a21a-a21d) to provide information (d7) representing said force.

2. A device according to claim 1, characterized in that said noise reduction means (5a-5d; 21a-21d; 21a*-21d*) includes a plurality of digital filters (21a-21d) the number of which is the same as that of said digital signals (a3a-a3d).

3. A device according to claim 2, characterized in that each of said digital filters (21a-21d) has an attenuation characteristic corresponding to a pattern of noise components of said digital signal which vary with time.

4. A device according to claim 1, characterized in that said noise reduction means (5a-5d; 21a-21d; 21a*-21d*) includes a plurality of digital noise reduction circuits (21a*-21d*) the number of which is the same as that of said digital signals (a3a-a3d).

5. A device according to any one of claims 1 to 4, characterized in that said combining means (6, 7) includes means (21e, 21e*) for attenuating noise components involved in a combined result (d6) of said low noise digital signals (a21a-a21d).

6. A device according to any one of claims 1 to 5, characterized in that said converting means (1a-1d; 2a-2d; 3a-3d) includes:
a plurality of load cells (1a-1d) for converting the force into a plurality of analog signals (a1a-a1d);
means (15a-15d, 16) for transmitting force, corresponding to weight of an object to be measured, to each of said load cells (1a-1d); and
means (2a-2d; 3a-3d) for respectively converting said analog signals (a1a-a1d) into digital signals (d3a-d3d),
wherein said noise reduction means (5a-5d; 21a-21d; 21a*-21d*) includes:
means (5a-5d) for individually storing said digital signals (d3a-d3d) for a prescribed period of time; and
means (21a-21d) for reducing noise components involved in each of digital signals (d5a-d5d) read from said storing means (5a-5d),
and wherein said combining means (6, 7) includes:
means (6) for generating, as a signal representing the weight of said object, a total sum (d6) of output signals (d21a-d21d) from said reducing means (21a-21d);
means (7) for temporarily storing said total sum (d6); and
means (22) for displaying data stored in said temporarily storing means (7).

7. A device according to claim 6, characterized by further comprising:
means (8) for calculating a product of said total sum (d6) and a predetermined unit price, and displaying a result of the product calculation at said displaying means (22).

## Patentansprüche

1. Einrichtung zum Messen einer physikalischen Kraft, gekennzeichnet durch:
eine Einrichtung (1a-1d; 2a-2d; 3a-3d) zum Umwandeln einer Kraft in mehrere Digitalsignale (a3a-a3d);
eine Störungsreduktionseinrichtung (5a-5d; 21a-21d; 21a*-21d*) zum unabhängigen Reduzieren der jeweiligen Störungskomponenten der Digitalsignale (a3a-a3d), um mehrere niedrig störende Digitalsignale (a21a-a21d) zu erzeugen ; und
eine Einrichtung (6, 7) zum Kombinieren der niedrig störenden Digitalsignale (a21a-a21d), um Informationen (d7) über die Kraft zu erhalten.

2. Einrichtung nach Anspruch 1, dadurch gekennzeichnet, daß die Störungsreduktionseinrichtungen (5a-5d; 21a-21d; 21a*-21d*) mehrere Digitalfilter (21a-21d) enthalten, deren Anzahl dieselbe wie die der Digitalsignale (a3a-a3d) ist.

3. Einrichtung nach Anspruch 2, dadurch gekennzeichnet, daß jedes der Digitalfilter (21a-21d) eine Dämpfungscharakteristik entsprechend einem Muster von Störungskomponenten des Digitalsignals aufweist, das sich mit der Zeit ändert.

4. Einrichtung nach Anspruch 1, dadurch gekennzeichnet, daß die Störungsreduktionseinrichtungen (5a-5d; 21a-21d; 21a*-21d*) mehrere Störungsreduktionsschaltungen (21a*-21d*) enthalten, deren Anzahl dieselbe wie die der Digitalsignale (a3a-a3d) ist.

5. Einrichtung nach einem der Ansprüche 1 bis 4, dadurch gekennzeichnet, daß die Einrichtungen (6, 7) zum Kombinieren Mittel (21e, 21e*) zur Dämpfung von Störungskomponenten aufweisen, die in dem kombinierten Resultat (d6) der niedrig störenden Digitalsignale (a21a-a21d) enthalten sind.

6. Einrichtung nach einem der Ansprüche 1 bis 5, dadurch gekennzeichnet, daß die Einrichtung (1a-1d; 2a-2d; 3a-3d) zum Umwandeln folgende Bauteile aufweist:
mehrere Kraftmeßdosen (1a-1d) zum Umwandeln der Kraft in mehrere Analogsignale (a1a-a1d);
Einrichtungen (15a-15d, 16) zum Übertragen einer Kraft, die dem Gewicht eines zu messenden Objektes entspricht, auf jede der Kraftmeßdosen (1a-1d); und
Einrichtungen (2a-2d; 3a-3d) zum jeweiligen Umwandeln der Analogsignale (a1a-a1d) in Digitalsignale (d3a-d3d),
worin die Störungsreduktionseinrichtung (5a-5d; 21a-21d; 21a*-21d*) aufweist:
eine Einrichtung (5a-5d) zum einzelnen Speichern der Digitalsignale (d3a-d3d) über eine bestimmte Zeitperiode; und
eine Einrichtung (21a-21d) zum Reduzieren der in jedem der aus der Speichereinrichtung (5a-5d) gelesenen Digitalsignale (d3a-d3d) enthaltenen Störungskomponenten,
und worin die Einrichtung (6, 7) zum Kombinieren aufweist:
eine Einrichtung (6) zum Erzeugen einer Gesamtsumme (d6) der Ausgangssignale (d21a-d21d) aus der Einrichtung (21a-21d) zum Reduzieren als ein das Gewicht des Objektes wiedergebendes Signal;
eine Einrichtung (7) zum zeitweisen Speichern der Gesamtsumme (d6); und
eine Einrichtung (22) zum Anzeigen der in der Einrichtung (7) zum zeitweisen Speichern gespeicherten Daten.

7. Einrichtung nach Anspruch 6, dadurch gekennzeichnet, daß sie weiterhin aufweist:
eine Einrichtung (8) zum Berechnen des Produktes aus der Gesamtsumme (d6) und einem vorgegebenen Preis einer Einheit, und zum Anzeigen der Ergebnisses der Produktberechnung auf der Anzeigeeinrichtung (22).

## Revendications

1. Dispositif pour mesurer une force physique, caractérisé en ce qu'il comprend :
des moyens (1a à 1d ; 2a à 2d ; 3a à 3d) pour convertir une force en une pluralité de signaux numériques (a3a à a3d) ;
des moyens de réduction de bruit (5a à 5d ; 21a à 21d ; 21a* à 21d*) pour réduire, de manière indépendante, les composantes de bruit respectives desdits signaux numériques (a3a à a3d) pour fournir une pluralité de signaux numériques à faible bruit (a21a à a21d) ; et
des moyens (6, 7) pour combiner lesdits signaux numériques à faible bruit (a21a à a21d) pour donner une information (d7) représentant ladite force.

2. Dispositif selon la revendication 1, caractérisé en ce que lesdits moyens de réduction de bruit (5a à 5d ; 21a à 21d ; 21a* à 21d*) comprennent une pluralité de filtres numériques (21a à 21d), dont le nombre est le même que celui desdits signaux numériques (a3a à a3d).

3. Dispositif selon la revendication 2, caractérisé en ce que chacun desdits filtres numériques (21a à 21d) a une caractéristique d'atténuation correspondant à une figure de composantes de bruit dudit signal numérique qui varient avec le temps.

4. Dispositif selon la revendication 1, caractérisé en ce que lesdits moyens de réduction de bruit (5a à 5d ; 21a à 21d ; 21a* à 21d*) comprennent une pluralité de circuits numériques réducteurs de bruit (21a* à 21d*), dont le nombre est le même que celui desdits signaux numériques (a3a à a3d).

5. Dispositif selon l'une quelconque des revendications 1 à 4, caractérisé en ce que lesdits moyens de combinaison (6, 7) comprennent un moyen (21e, 21e*) pour atténuer les composantes de bruit comprises dans un résultat combiné (d6) desdits signaux numériques à faible bruit (a21a à a21d).

6. Dispositif selon l'une quelconque des revendications 1 à 5, caractérisé en ce que lesdits moyens convertisseurs (1a à 1d ; 2a à 2d ; 3a à 3d) comprennent :
une pluralité de capteurs de charge (1a à 1d) pour convertir la force en une pluralité de signaux analogiques (a1a à a1d) ;
des moyens (15a à 15d, 16) pour transmettre une force, correspondant au poids d'un objet à mesurer, à chacun desdits capteurs de charge (1a à 1d) ; et
des moyens (2a à 2d ; 3a à 3d) pour convertir, respectivement, lesdits signaux analogiques (a1a à a1d) en signaux numériques (d3a à d3d),
dans lequel lesdits moyens de réduction de bruit (5a à 5d ; 21a à 21d ; 21a* à 21d*) comprennent :
des moyens (5a à 5d) pour mémoriser individuellement lesdits signaux numériques (d3a à d3d) pour une période de temps prescrite ; et
des moyens (21a à 21d) pour réduire les composantes de bruit comprises dans chacun des signaux numériques (d5a à d5d) lus à partir desdits moyens de mémorisation (5a à 5d) ;
et dans lequel lesdits moyens de combinaison (6, 7) comprennent :
un moyen (6) pour produire, sous la forme d'un signal représentant le poids dudit objet, une somme totale (d6) des signaux de sortie (d21a à d21d) venant desdits moyens réducteurs (21a à 21d) ;
un moyen (7) pour conserver temporairement ladite somme totale (d6) ; et
un moyen (22) pour afficher les données conservées dans ledit moyen de mémorisation temporaire (7).

7. Dispositif selon la revendication 6, caractérisé en ce qu'il comprend en outre :
un moyen (8) pour calculer un produit de ladite somme totale (d6) et d'un prix unitaire prédéterminé, et pour afficher un résultat du calcul du produit sur ledit moyen d'affichage (22).
